# EUROPEAN PATENT SPECIFICATION

(11) **EP 3 992 404 B1**
(45) Date of publication and mention of the grant of the patent: **14.08.2024**
(21) Application number: 21204774.0
(22) Date of filing: 26.10.2021
(51) Int. Cl.: E05D 11/10, A47K 13/12

(54) **TOP MOUNT SELF-LOCKING MECHANISM**
SELBSTVERRIEGELNDER MECHANISMUS ZUR OBEREN BEFESTIGUNG
MÉCANISME AUTOBLOQUANT POUR MONTAGE SUPÉRIEUR

(30) Priority: 27.10.2020 CN 202022415038 U
(43) Date of publication of application: 04.05.2022
(73) Proprietor: Geberit International AG, 8645 Jona (CH)
(72) Inventor: QIAN, Weian, 201802 Shanghai (CN); YUAN, Yihui, 201802 Shanghai (CN); YOU, Hang, 201802 Shanghai (CN); YANG, Liang, 201802 Shanghai (CN)
(74) Representative: König Szynka Tilmann von Renesse Patentanwälte Partnerschaft mbB München

(56) References cited:
- CN-U- 208 211 961
- US-A- 5 769 188

## Description

### Field of the Invention

The invention relates to the field of smart top mounts for toilets and to a top mount self-locking mechanism.

### Background of the Invention

With the improvement of people's living standards and hygiene awareness, the popularizing rate of smart toilets is getting higher and higher. Many families have already chosen smart toilets when renovating, and moreover, some families have replaced ordinary toilet covers with smart toilet top mounts. In addition, some hotels and guest houses are also equipped with the smart toilets, making the application of the smart toilets wider.

With the increasement of user demands, a variety of functions have been simultaneously integrated into a single smart top mount for a toilet, such as heating, warm water cleaning, warm air drying, deodorization and sterilization, and other functions. However, the increase in functions leads to a bigger and bigger structure of a rear base of a top mount to accommodate an increasing number of electronic elements, thereby causing the problem that in the using process of the top mount, the gravity center is unstable after a top mount seat ring is turned up, which affects the comfort experience of a user in use. Multiple solutions to provide a rotary damper with a self-standing mechanism are found as prior art. For example, the US 5769188A shows a device which provides the required elastic functionality by metal needles, being in interaction with an outer annular spring. A rotary movement of the shaft is transferred via the needles into a radial movement, widening the annular spring.

### Summary of the Invention

In view of the above defects of the prior art, the technical problem to be solved by the invention is to provide a stable top mount overturning self-locking mechanism capable of being kept in situ.

In order to realize the above purpose, the invention provides a top mount self-locking mechanism according to claim 1, including an outer cylinder, a limiting clamp spring, a rotating shaft and a positioning sleeve; the limiting clamp spring is arranged in the outer cylinder in a sleeved mode, the rotating shaft is arranged at an axis part of the outer cylinder, and the positioning sleeve is arranged on the rotating shaft in a sleeving mode and moves along with the rotating shaft, wherein, the limiting clamp spring is annular and includes a first convex rib and a second convex rib, and the first convex rib and the second convex rib face the rotating shaft and are arranged on a longitudinal position of the limiting clamp spring; and shifting pieces are arranged on an outer side of the positioning sleeve and located between the first convex rib and the second convex rib.

Further, there are two shifting pieces, and the two shifting pieces are arranged on two sides of the positioning sleeve respectively.

Further, the rotating shaft is a damper.

Further, the limiting clamp spring is made of an elastic material.

Further, the positioning sleeve is made of nylon resin.

The invention has the technical effect that after a top mount part is turned up, its position can be stably maintained, and the top mount part cannot be accidentally turned down and affect the usage experience of a user in the process of being used by the user.

The conception, specific structure and produced technical effects of the invention will be further explained below in combination with the drawings to fully understand the purposes, features and effects of the invention.

### Brief Description of the Drawings

By reading the detailed description of the non-restrictive embodiment with reference to the drawings below, other features, purposes and advantages of the invention will be more apparent:
Fig. 1 shows a structural diagram of an embodiment of the invention;
Fig. 2 shows a structural side view of the embodiment of the invention; and
Fig. 3 shows a structural side view of another state of the embodiment of the invention.

The description on signs of the drawings: 1-outer cylinder; 2-limiting clamp spring; 21-first convex rib; 22-second convex rib; 3-positioning sleeve; 31-shifting piece; 4-rotating shaft.

### Detailed Description of the Embodiment

A preferred embodiment of the invention is introduced below with reference to the drawings of the description to make its technical contents clearer and convenient to understand.

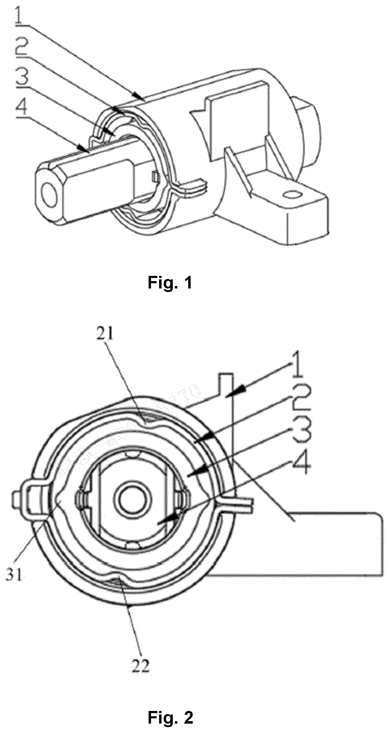

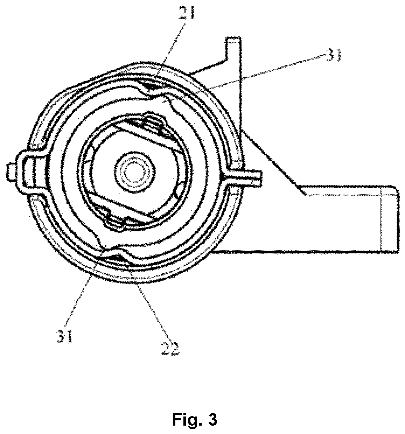

As shown in Fig. 1 to Fig. 3, the invention discloses a top mount self-locking mechanism, including an outer cylinder 1, a limiting clamp spring 2, a rotating shaft 4 and a positioning sleeve 3; the limiting clamp spring 2 is arranged in the outer cylinder 1 in a sleeved mode, the rotating shaft 4 is arranged at an axis part of the outer cylinder 1, and the positioning sleeve 3 is arranged on the rotating shaft 4 in a sleeving mode and moves along with the rotating shaft 4, wherein, the limiting clamp spring 2 is annular and includes a first convex bulge 21 and a second convex bulge 22, and the first convex bulge 21 and the second convex bulge 22 face the rotating shaft 4 and are arranged on a longitudinal position of the limiting clamp spring 2; and shifting structures 31 are arranged on an outer side of the positioning sleeve 3 and located between the first convex bulge 21 and the second convex bulge 22.

In an embodiment, the rotating shaft 4 is mounted in a center of an inner cavity of the outer cylinder 1 and can rotate at random axially. In general, the rotating shaft 4 is connected with a toilet cover plate or a seat ring thereof, when the cover plate or the seat ring is lifted, the rotating shaft 4 drives the positioning sleeve 3 to rotate in a clockwise direction shown in Fig. 2, and when the shifting pieces 31 outside the positioning sleeve 3 cross the first convex rib 21 and the second convex rib 22, the cover plate or the seat ring is positioned. When there is a need to put it down, the cover plate or the seat ring is directly pressed to make the shifting pieces 31 reversely cross the first convex rib 21 and the second convex rib 22, and then the cover plate or the seat ring can be put down.

Further, there are two shifting pieces 31, and the two shifting pieces 31 are arranged on the two sides of the positioning sleeve 3 respectively. Preferably, the positions of the shifting pieces 31 are perpendicular to the positions of the first convex rib 21 and the second convex rib 22, and then the cover plate or the seat ring can be fixed after being overturned into a perpendicular state.

Further, the rotating shaft 4 is a damper. Thus, when the top mount part falls, a slow-descending function of the top mount part is provided.

Further, the limiting clamp spring 2 is made of spring steel, which has high elasticity, high strength and high rebound elasticity, so that the limited shifting pieces 31 cross or are separated from the first convex rib 21 and the second convex rib 22.

Further, the positioning sleeve 3 is made of nylon resin, which has the characteristics of high toughness and high abrasive resistance, so that the shifting pieces 31 on the positioning sleeve 3 cross or are separated from the first convex rib 21 and the second convex rib 22 better when the positioning sleeve 3 rotates.

## Claims

1. A top mount self-locking mechanism for toilets, wherein the top mount self-locking mechanism comprises an outer cylinder (1), a limiting clamp spring (2), a rotating shaft (4) and a positioning sleeve (3); the limiting clamp spring (2) is arranged in the outer cylinder (1) in a sleeved mode, the rotating shaft (4) is arranged at an axis part of the outer cylinder (1), and the positioning sleeve (3) is arranged on the rotating shaft (4) in a sleeving mode and moves along with the rotating shaft (4),
wherein the limiting clamp spring (2) is annular and comprises a first convex rib (21) and a second convex rib (22), and the first convex rib (21) and the second convex rib (22) face the rotating shaft (4) and are arranged on a longitudinal position of the limiting clamp spring (2); and shifting pieces (31) are arranged on an outer side of the positioning sleeve (3) and located between the first convex rib (21) and the second convex rib (22).

2. The top mount self-locking mechanism according to claim 1, **characterized in that** there are two shifting pieces (31), and the two shifting pieces (31) are arranged on two sides of the positioning sleeve (3) respectively.

3. The top mount self-locking mechanism according to claim 1 or 2, **characterized in that** the rotating shaft (4) is a damper.

4. The top mount self-locking mechanism according to one of the preceding claims, **characterized in that** the limiting clamp spring (2) is made of spring steel.

5. The top mount self-locking mechanism according to one of the preceding claims, **characterized in that** the positioning sleeve (3) is made of nylon resin.

## Patentansprüche

1. Selbstverriegelnder Mechanismus für einen Aufsatz für Toiletten, wobei der selbstverriegelnde Mechanismus einen Außenzylinder (1), eine Begrenzungsklemmfeder (2), eine Drehwelle (4) und eine Positionierhülse (3) umfasst; wobei die Begrenzungsklemmfeder (2) in dem Außenzylinder (1) in ummantelter Weise angeordnet ist, die Drehwelle (4) an einem Achsenteil des Außenzylinders (1) angeordnet ist, und die Positionierhülse (3) auf der Drehwelle (4) in ummantelter Weise angeordnet ist und sich zusammen mit der Drehwelle (4) bewegt,
wobei die Begrenzungsklemmfeder (2) ringförmig ist und eine erste konvexe Rippe (21) und eine zweite konvexe Rippe (22) aufweist, und die erste konvexe Rippe (21) und die zweite konvexe Rippe (22) der Drehwelle (4) zugewandt sind und an einer Längsposition der Begrenzungsklemmfeder (2) angeordnet sind; und Verschiebungsstücke (31) an einer Außenseite der Positionierhülse (3) angeordnet sind und sich zwischen der ersten konvexen Rippe (21) und der zweiten konvexen Rippe (22) befinden.

2. Selbstsperrender Aufsatzmechanismus nach Anspruch 1, **dadurch gekennzeichnet, dass** zwei Verschiebungsstücke (31) vorhanden sind und die beiden Verschiebungsstücke (31) jeweils auf einer von zwei Seiten der Positionierhülse (3) angeordnet sind.

3. Selbstsperrender Aufsatzmechanismus nach Anspruch 1 oder 2, **dadurch gekennzeichnet, dass** die Drehwelle (4) ein Dämpfer ist.

4. Selbstsperrender Aufsatzmechanismus nach einem der vorhergehenden Ansprüche, **dadurch gekennzeichnet, dass** die Begrenzungsklemmfeder (2) aus Federstahl hergestellt ist.

5. Selbstsperrender Aufsatzmechanismus nach einem der vorhergehenden Ansprüche, **dadurch gekennzeichnet, dass** die Positionierhülse (3) aus Nylonkunststoff hergestellt ist.

## Revendications

1. Mécanisme autobloquant pour abattant de toilettes, ledit mécanisme autobloquant pour abattant comprenant un cylindre externe (1), un ressort de serrage de limitation (2), un arbre rotatif (4) et un manchon de positionnement (3) ; le ressort de serrage de limitation (2) étant disposé dans le cylindre externe (1) dans un mode manchonné, l'arbre rotatif (4) étant disposé au niveau d'une partie d'axe du cylindre externe (1), et le manchon de positionnement (3) étant disposé sur l'arbre rotatif (4) dans un mode manchonnant et se déplaçant conjointement avec l'arbre rotatif (4),
ledit ressort de serrage de limitation (2) étant annulaire et comprenant une première nervure convexe (21) et une deuxième nervure convexe (22), et la première nervure convexe (21) et la deuxième nervure convexe (22) faisant face à l'arbre rotatif (4) et étant disposées sur une position longitudinale du ressort de serrage de limitation (2) ; et des pièces de déplacement (31) étant disposées sur un côté extérieur du manchon de positionnement (3) et situées entre la première nervure convexe (21) et la deuxième nervure convexe (22).

2. Mécanisme autobloquant pour abattant selon la revendication 1, **caractérisé en ce qu'**il se trouve deux pièces de déplacement (31), et les deux pièces de déplacement (31) sont disposées l'une et l'autre des deux côtés du manchon de positionnement (3).

3. Mécanisme autobloquant pour abattant selon la revendication 1 ou 2, **caractérisé en ce que** l'arbre rotatif (4) est un amortisseur.

4. Mécanisme autobloquant pour abattant selon l'une des revendications précédentes, **caractérisé en ce que** le ressort de serrage de limitation (2) est en acier à ressort.

5. Mécanisme autobloquant pour abattant selon l'une des revendications précédentes, **caractérisé en ce que** le manchon de positionnement (3) est en résine de nylon.
